(19) **Europäisches Patentamt / European Patent Office / Office européen des brevets**

(11) **EP 4 723 647 A1**

(12) **EUROPEAN PATENT APPLICATION**

(43) Date of publication:
08.04.2026 Bulletin 2026/15

(21) Application number: 24306609.9

(22) Date of filing: 01.10.2024

(51) International Patent Classification (IPC):
*H04N 21/234* (2011.01)　　*H04N 21/438* (2011.01)
*H04N 21/81* (2011.01)　　*G06N 3/045* (2023.01)

(52) Cooperative Patent Classification (CPC):
H04N 21/816; G06N 3/045; H04N 21/23412;
H04N 21/4384

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicants:
• **Institut Mines Telecom**
  **91120 Palaiseau (FR)**
• **CentraleSupélec**
  **91190 - Gif sur Yvette (FR)**
• **Centre National de la Recherche Scientifique**
  **75016 Paris (FR)**

• **Université Paris-Saclay**
  **91190 Gif-sur-Yvette (FR)**
• **Universita' Degli Studi Di Padova**
  **35122 Padova (IT)**

(72) Inventors:
• **VIJAYARATNAM, Melan**
  **91120 Palaiseau (FR)**
• **CAGNAZZO, Marco**
  **35122 Padova (IT)**
• **VALENZISE, Giuseppe**
  **75016 Paris (FR)**
• **TARTAGLIONE, Enzo**
  **91120 Palaiseau (FR)**

(74) Representative: **Ipsilon**
  **12 Avenue d'Italie**
  **75013 Paris (FR)**

(54) **METHOD FOR REDUCING LATENCY IN VIDEO TRANSMISSION**

(57) The invention relates to a method for reducing latency in video transmission, using an input video sequence and a neural network that accounts, at the encoder side, for dynamic objects, the method comprising:
i. initializing the neural network with a warm-up training for frames $I_{0,l}, I_{0,r} ... I_{N,l}, I_{N,r}$ with $I_{i,j}$ denoting a frame in the input sequence and $j \in \{l,r\}$ denoting left or right view associated for modeling objects present in each frame,
ii. operating the network to learn a latent encoding vector for each distinct object and register the position of said objects,
iii. in an inference step, predicting the positions of each object by using a filter,
iv. using the frame predicted at the previous time step as input for the network and the positions of the objects predicted in step iii) to render the estimated position of the objects at the next time step to predict the next frame.

[Fig. 2]

Fig. 2

**Description**

**Technical field**

The present invention relates to a method for reducing latency in video transmission.

**Prior art**

Ultra-low latency video delivery plays a crucial role in numerous interactive video services. In recent years, significant attention has been directed towards minimizing latency originating from individual components within video delivery systems, encompassing acquisition, encoding, and network transmission. Latency is the time it takes for a data packet to travel from one point to travel from one point to another.

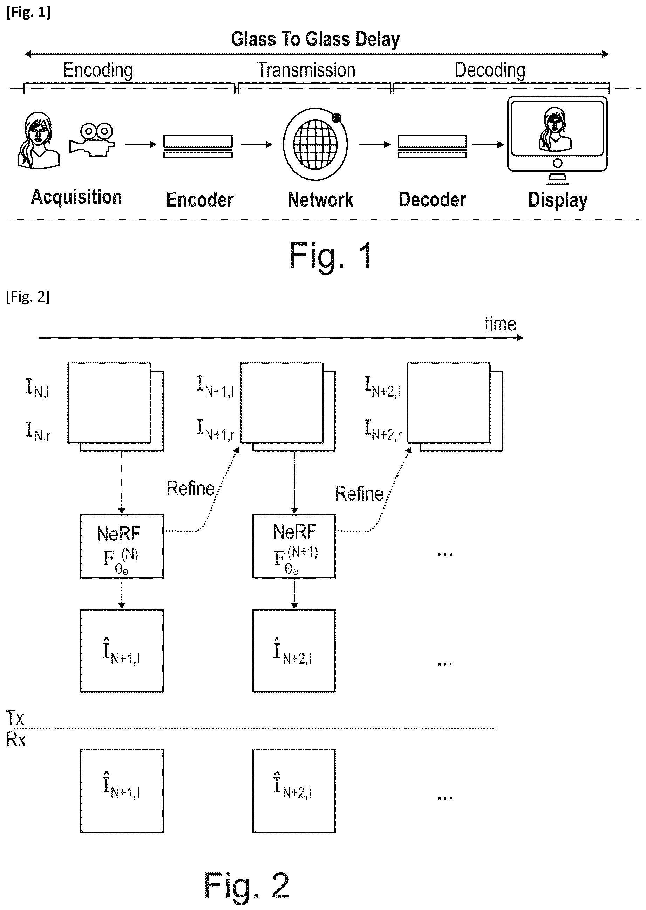

Figure 1 illustrates the concept of "glass-to-glass delay". It refers to the total time elapsed between the capture of an image or video by a camera (the first glass) and the display of that image or video on a screen (the second glass). This includes all intermediate processes such as compression, transmission, decompression, and rendering.

Temporal extrapolation has been recently proposed as a tool to mitigate latency.

The latency compensation framework based on temporal extrapolation was first described in [1]. Some important aspects, like taking into account the extrapolation time and the comparison with more traditional approaches were addressed later [2, 3]. These works indicate that the extrapolation technique surpasses encoding rate reduction, particularly in scenarios involving the transmission of minimal temporal information.

Latency compensation through frame extrapolation can exceed that achieved with rate reduction, potentially resulting in zero or even negative end-to-end latency. Unified measures for rate-distortion-latency trade-off have been introduced in [4] and designed as ELR-PSNR: Equal-Latency, Equal-Rate Delta PSNR, and EPR-Latency: Equal-PSNR, Equal-Rate Delta Latency, particularly for latency reduction in video transmission.

One important conclusion of these works is that the quality of the extrapolated images plays a critical role when one considers the deployment of this paradigm in real-life applications. The employed extrapolation method, SDCNet [5], can present bothersome artifacts such as geometric deformations of objects.

However, extrapolation techniques predominantly operate within the 2D-pixel domain, disregarding the 3D coherence between objects and backgrounds. Better extrapolation techniques are needed.

Neural radiance fields (NeRFs) can reconstruct the underlying 3D scene from a set of positioned images and render it from novel views. While the earliest works focused on a set of still images, as described in [6], interest in tackling the more complex task concerning video data has recently grown, as in [7]. NeRV [8] models the spatio-temporal volume of a scene using a neural network and leads to a representation that is comparable to standard video compression techniques. Yoon *et al.* [9] synthesize novel views of dynamic scenes with an estimation of the depth beforehand. Later, Gao *et al.* [10] propose regularization losses to constrain the problem of rendering a 3D scene based on the optical flow of the previous and future frames. However, this feature makes this method hardly usable for streaming applications. $D^2$NeRF [11] separates the moving objects and the static backgrounds by two distinct neural radiance fields. NSG [12] introduces a learned scene graph representation that captures object transformations and radiance in complex urban scene settings using only stereo image. This enables the efficient rendering of new scene arrangements and perspectives. NSG's ability to work on real automotive data with multi-object dynamic scenes brought us to incorporate it into our proposed scheme.

The advancement of the NeRFs for videos has sparked its potential use for streaming. NeRFPlayer, described in [13], decomposes points in the 4D space, i.e., 3D and time, into either static, deforming, or new areas. A sliding-window-based hybrid representation is then designed to efficiently model the decomposed neural fields. Li *et al.* [14] present an incremental learning paradigm for novel view synthesis of real-world dynamic scenes for handling video sequences on the fly using an explicit grid-based method. The storage overhead induced by using such a grid representation can be significantly reduced through the use of model difference-based compression. Incremental Neural Videos (INV), described in [15], is also based on the incremental learning idea and amortizes training across frames by reducing redundant learning. ProsGNeRF [16] proposes a progressive dynamic NeRF scheme that employs a temporal window strategy.

Dynamic Neural Radiance Field ($D^2$NeRF) [17] employs a self-supervised decoupling of dynamic and static objects from a monocular video. In this method, there is no tracking of the objects so for complex scenes the information of the objects from one frame to another might be lost.

The method described in [18] allows multi-view rendering of 2D videos by using optical flow, but it also uses forward flow, therefore assuming access to the next frame of the actual frame, which one does not have for video prediction.

The method in [19] uses video prediction using multiplane images. To predict the next frame a warping operation is applied. This method takes the frame as a whole and does not distinguish elements in the scene.

The method in [20], using predictability regularized neural motion fields, does prediction but on simplistic scenarios with no background and only one moving object in the scene. It could not be used in a more complex environment.

Non-rigid NeRFs are used in the method [21] to render multi-view images from the trained input video.

The method [22] concerns scalable large-scene neural view synthesis. It loads a NeRF from the moving car each time it arrives in a specific area. However, the loaded nerf does not account for any dynamic elements at all.

Articles [1] and [2] present an extrapolation in encoder/decoder schemes to reduce latency in video transmission schemes. The main takeaway is that the bottleneck comes from the video prediction tool itself to reduce latency as better extrapolation means less distortion.

NeRF faces a challenge in video prediction tasks due to its characteristic of overfitting the training on frames that are observed, which contradicts the nature of video prediction where future frames are unseen during inference.

There is a need for a method to reduce the latency in video transmission, in order to obtain swift response times in various applications, such as real-time communication, gaming, and interactive media.

The present invention notably seeks to meet this need.

**Disclosure of the invention**

One subject of the invention is a method for reducing latency in video transmission, using at least an input video sequence taken by a camera and a neural network $\mathcal{F}_{\theta_c}^{(N)}$ that accounts, at the encoder side, for dynamic objects at an N-th frame of said input video sequence, the method comprising at least the steps of, for a predefined time step:

> i. initializing the neural network with a warm-up training for frames $I_{0,l}, I_{0,r}...I_{N,l}, I_{N,r}$ with $I_{i,j}$ denoting the i-th frame in the input video sequence and j∈[l,r] denoting left (l) or right (r) view associated in order to model objects $\mathbf{l}_o$ present in each frame,
> ii. operating the network to learn a latent encoding vector for each distinct object $\mathbf{l}_o$ and register the position $\mathbf{p}_o$ of said objects,
> iii. in an inference step, predicting the positions $\hat{\boldsymbol{p}}_o$ of each object by using a filter, and
> iv. using the frame predicted at the previous time step as input for the network and the positions of the objects predicted in step iii) to render the estimated position of the objects at the next time step in order to predict the next frame.

The neural network preferably includes Neural Radial Fields, especially neural scene graphs (NSG).

The invention thus provides a method to reduce latency in video transmission systems with a more reliable technique that performs extrapolation with 3D awareness of the scene with NeRF. The invention allows the use of NeRFs for video prediction in complex environments. By leveraging stereo-pair images at the sender, the invention aims to proactively transmit the forthcoming frame from a singular viewpoint. By allowing the NeRF to learn the object in the 3D space, 3D Multi-object tracking algorithms are leveraged to predict the state of the future object position, rendered by the NeRF. Incremental learning is then used by updating the network on the incoming new frames from the stream.

The invention focuses on an incremental learning strategy to predict future frames with NeRF by rendering the 3D positions of the objects obtained through 3D multi-object tracking. The method is iterated through a loop comprising prediction and update steps to continually forecast future frames.

Thanks to the invention, the shape of the objects is conserved and their positions are accurately synthesized, which is important for remote-based applications relying on visual information.

In a preferred embodiment, the neural network $\mathcal{F}_{\theta_c}^{(N)}$ takes as input the 3D physical location $\mathbf{r}$ of the camera and its viewing direction $\mathbf{d}$ comprised of $\theta$ to define the position in the x-y plane and then $\phi$ to lift off the position of the camera from the x-y plane towards the z-axis.

Step i of the method allows modeling the objects in the 3D space.

The network in the warm-up phase advantageously learns the representation of the moving objects based on the positions $\mathbf{p}_o$ in the scene. This allows the network to learn how the objects interact within the scene.

The network learns a latent encoding vector for each distinct object $\mathbf{l}_o$ and registers the position $\mathbf{p}_o = [x,y,z]_o$ of said objects, which may be expressed as:

$$\mathcal{F}_{\theta_c}^{(N)} : (\mathbf{r}, \mathbf{d}, \mathbf{l}_o, \mathbf{p}_o) \rightarrow (\mathbf{c}, \sigma)$$

The filter may update the state of each trajectory representation and in particular the 3D coordinates of the objects:

$$xest = x + vx, \; yest = y + vy, \; zest = z + vz \,,$$

where $v_x$, $v_y$, $v_z$ represent the velocity in the 3D space.

The following equation may be used for effectively computing the positions of the objects for the next time step:

$$\mathcal{F}_{\theta_c}^{(N)} : (\mathbf{r}, \mathbf{d}, \mathbf{l}_o, \hat{\mathbf{p}}_o) \rightarrow (\hat{\mathbf{c}}, \hat{\sigma}) \,, \text{ with the neural model being } \mathcal{F}_{\theta_c}^{(N)} : (\mathbf{r}, \mathbf{d}, \mathbf{l}_o, \mathbf{p}_o) \rightarrow (\mathbf{c}, \sigma) \,, \text{ and } \mathbf{p}_o = [x,y,z]_o.$$

The frames of the input video sequence are advantageously stereo pair images.

The filter is advantageously a Kalman filter.

In a preferred embodiment, the frames predicted at the encoder side are sent to the receiver side so that only the predicted frames are displayed.

At the arrival of the next frames, the neural network may be fine-tuned to update its modelization of the objects and following this, the inference step may be employed once again.

At the warm-up training step, masks of the moving objects may be extracted using the Segment Anything Model (SAM) as for example described in the article [23].

At the warm-up training step, the neural network may be trained only on the pixels of the objects to learn about their 3D models.

At the inference step, the tracking algorithm AB3DMOT, described for example in article [24], may be used for predicting the position of the objects for the next time step.

The rendering capabilities of NeRF enable the projection of the model from 3D space to a reprojection into the 2D-pixel space during inference.

For the background pixels, a video inpainting tool, especially ProPainter, as for example described in the article [25], may be used from the input frames and the masks used at training to filter out the objects.

A linear combination of pixels from both foreground and background regions of the frames may be employed to fully reconstruct the next frame.

It is advantageously considered that the background is static and only objects within the scene are moving.

Said method according to the invention is advantageously performed by means of computer programs, automatically running on any electronic device comprising a processor, such as a mobile phone, a tablet, or a computer, mobile or fixed.

Computer program product

According to another aspect, the invention also relates to a computer program product for reducing latency in video transmission, the computer program product comprises a support and stored on these support instructions that can be read by a processor, these instructions being configured to perform the steps of the method according to the invention.

The features described above in relation with the method apply to the computer program product.

**Brief description of the drawings**

The invention may be better understood upon reading the following detailed description of non-limiting implementation examples thereof and upon studying the appended drawing, in which:

Figure 1, already described, illustrates the concept of "glass-to-glass delay",
Figure 2 shows an example of a video transmission scheme using the method according to the invention,
Figure 3 illustrates an example of the training and inference steps of the method according to the invention, and
Figures 4 to 6 show comparisons and results obtained by applying the method according to the invention.

**Detailed description**

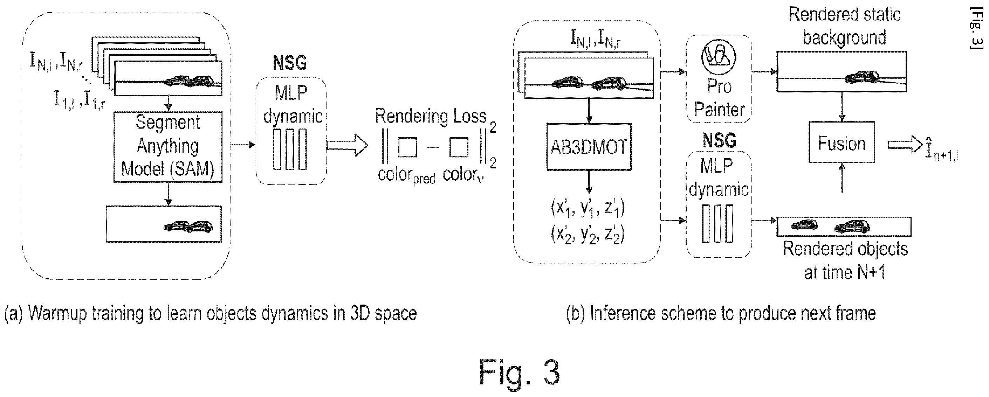

Preferably and as described above, the main steps of the method according to the invention are illustrated in figures 2 and 3.

Figure 2 illustrates an example of the inference and refinement strategy after the initial warm-up training in a video transmission scheme. As preferred and explained above, extrapolation is used at the encoder side and the extrapolated frame is displayed at the decoder side.

Figure 3 describes a detailed example of training and inference schemes for using neural scene graphs for video prediction with regard to the scheme in Figure 2. At the warm-up training step, as illustrated in Figure 3(a), the NeRF is initialized for frames $I_{0,l}, I_{0,r} ... I_{N,l}, I_{N,r}$ with $I_{i,j}$ denoting the i-th frame in the input video sequence and $j \in \{l,r\}$ denoting left ($l$) or right ($r$) view associated in order to model objects $\mathbf{l}_o$ present in each frame. In this example, the Segment Anything Model (SAM) is used to capture only the dynamic objects and train the NeRF on the stereo image pairs of the objects only to learn the objects in the 3D space. Then, in an example of inference step illustrated in Figure 3(b), a 3D multi-object tracking algorithm AB3DMOT is used to predict the future position of the objects which is rendered by the trained NeRF. For the static background, a video inpainting method is advantageously used. Such a method is based on the previously computed segmentation masks and the full image. Preferably, the two obtained outputs are fused for the resulting future frame prediction.

The frame predicted at the previous time step is used as input for the network as well as the positions of the objects predicted in inference step iii) to render the estimated position of the objects at the next time step in order to predict the next frame.

In an example, the method of the invention is validated using the Kitti dataset [26] which showcases intricate urban scenarios relevant to autonomous driving. More specifically, is used the Kitti MOT dataset that provides stereo images at 1242×375 resolution for every sequence. For the synthetic counterpart, sequences from the virtual Kitti dataset [27] are also used. The chosen sequences are displayed in Table 1.

**Table 1:** Sequences used for the setup

| Scene | Dataset | Sequence | Split | Training frames |
|---|---|---|---|---|
| **A** | Kitti | 12 | Train | 000-004 |
| **B** | Kitti | 15 | Test | 454-458 |
| **C** | Kitti | 17 | Test | 256-260 |
| **D** | Kitti | 12 | Test | 513-517 |
| **E** | Vkitti | 1 | / | 409-413 |

Sequences with small to no camera motion are only considered in this setup. Additionally, given the nature of the video prediction task, the training does not aim at overfitting the entire sequence, assuming that the predicted frames are inaccessible. The training frames correspond to the stereo image pairs used for the warm-up stage, necessary to learn the objects in the 3D space. This training allows free manipulation of the objects by using tracking data that predicts the future position. Next, future frames are iteratively predicted and the network is updated by refining the NSG network upon receiving the true stereo image pair. As the AB3DMOT probes and updates its state with the new ground truth frames, this process is leveraged to the desired advantage to regulate the NSG. This fine-tuning enables to mitigate the risk of deviating too far from the overfitting tendencies of NeRFs. If too many future frames are considered, the NSG may struggle to accurately render the positions of future objects.

For comparison purposes, a straightforward frame-copy extrapolation method is incorporated, referred to as CopyLast. This technique simply duplicates the last available frame, serving as a baseline with minimal complexity. SDCNet is also included, categorized as a fusion-based method for using both optical flows and convolutional kernels from the pixels to generate the extrapolated frame. It was reported as the best solution for the latency-distortion trade-off.

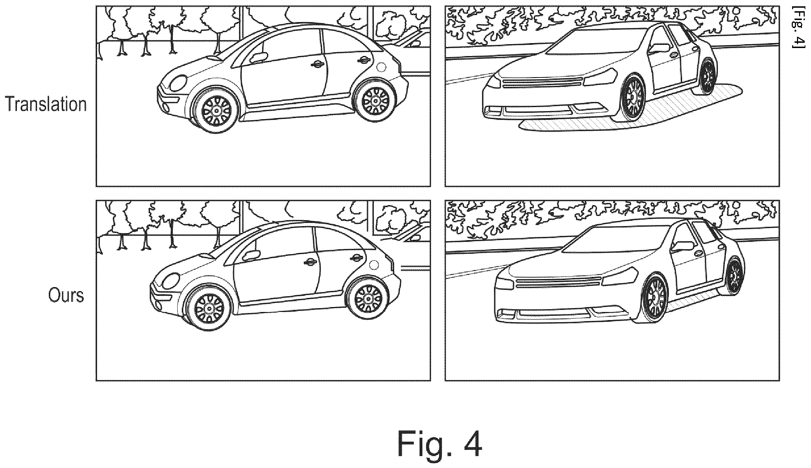

Qualitative results of some sequences are observed in Figure 4, showing that the proposed method is able to preserve the shape of the objects through a predicted frame. The CopyLast records the object at the previous position while SDCNet deforms the objects by trying to move the pixels from the computed motion. For quantitative measures, the sequences are evaluated using the peak signal-to-noise ratio (PSNR) and the structure similarity index score (SSIM) in Table 2 over the different sequences. The PSNR shows improvement with respect to CopyLast and SDCNet for some sequences but not all of them, while the SSIM is consistently on par or higher than the other methods.

**Table 2:** Extrapolation results on the scenes.

| Scene | CopyLast | | SDCNet | | Ours | |
|---|---|---|---|---|---|---|
| | PSNR | SSIM | PSNR | SSIM | PSNR | SSIM |
| A | 28.39 | **0.97** | 30.31 | **0.97** | **30.87** | **0.97** |
| B | 17.88 | 0.82 | 19.74 | 0.85 | **22.44** | **0.86** |
| C | 24.62 | 0.97 | **28.33** | **0.98** | 26.79 | 0.97 |
| D | 30.49 | 0.98 | **31.12** | **0.98** | 29.57 | **0.98** |
| E | 20.68 | 0.89 | **27.45** | **0.90** | 21.66 | 0.90 |

However, as PSNR and SSIM metrics fail to capture the geometric enhancement of object shapes, an alternative objective metric is used. A segmentation-based approach [28] is used to compute the intersection over union (IoU) of the moving objects. Assessing IoU, allows obtaining insights into how well the predicted frames align with the true object boundaries, providing a more comprehensive evaluation of the model performance in capturing object shapes and spatial relationships. Since the ground truth is not provided, the input segmented frames are used as pseudo labels. In Table 3, one can see a difference in overall IoUs when compared to the masks of the moving objects corresponding to ground truth.

**Table 3:** Intersection over Union (IoU) results.

| Scene | CopyLast | SDCNet | Ours |
|---|---|---|---|
| A | 0.48 | 0.70 | **0.85** |
| B | 0.55 | 0.73 | **0.94** |
| C | 0.82 | **0.89** | 0.84 |
| D | 0.60 | 0.70 | **0.78** |
| E | 0.78 | **0.94** | 0.93 |
| Average | 0.65 | 0.79 | **0.87** |

To validate the use of the NeRF to synthesize the future locations of objects, it is compared to a simple baseline. The masked objects are used and translated with respect to the predicted future position obtained through Kalman filters. The same structure is used at inference by using the masked objects. The objects are translated and then inpainting is used to fuse the background and object pixels. Table 4 verifies and justifies the use of NeRF, it is able to move in the 3D space and an inherent notion of the depth of the scene is known whereas the translation has to be done in the 2D space of the pixels and therefore resulting in a mismatch of objects true locations as one can see in Figure 4.

**Table 4:** Ablation study on the use of NeRF.

| Scene | Baseline translation | | Ours | |
|---|---|---|---|---|
| | PSNR | SSIM | PSNR | SSIM |
| A | 29.50 | **0.97** | **30.87** | 0.97 |
| B | 20.76 | 0.85 | **22.44** | **0.86** |
| C | 25.68 | **0.97** | **26.79** | 0.97 |
| D | 28.41 | 0.97 | **29.57** | **0.98** |
| E | 19.76 | 0.88 | **21.66** | **0.90** |

Secondly, the use of the main blocks used for the tasks is studied, mainly the segmentation used for the masks and the refinement used for each arriving frame. Table 5 shows the effectiveness of using masks of the objects with a consequent gain of about 5 dB in the learning as well as incremental learning to learn from each new arriving image-pairs. The use of the refinement is beneficial to control the NeRF to have more data and therefore model better the objects.

**Table 5:** Ablation study on the use of segmentation and incremental learning across all sequences.

| Segmentation | Refinement | PSNR ✗ | SSIM |
|---|---|---|---|
| ✗ | ✗ | 20.73 | 0.87 |
| ✗ | ✓ | 21.52 | 0.88 |
| ✓ | ✗ | 25.65 | 0.93 |
| ✓ | ✓ | **26.44** | **0.94** |

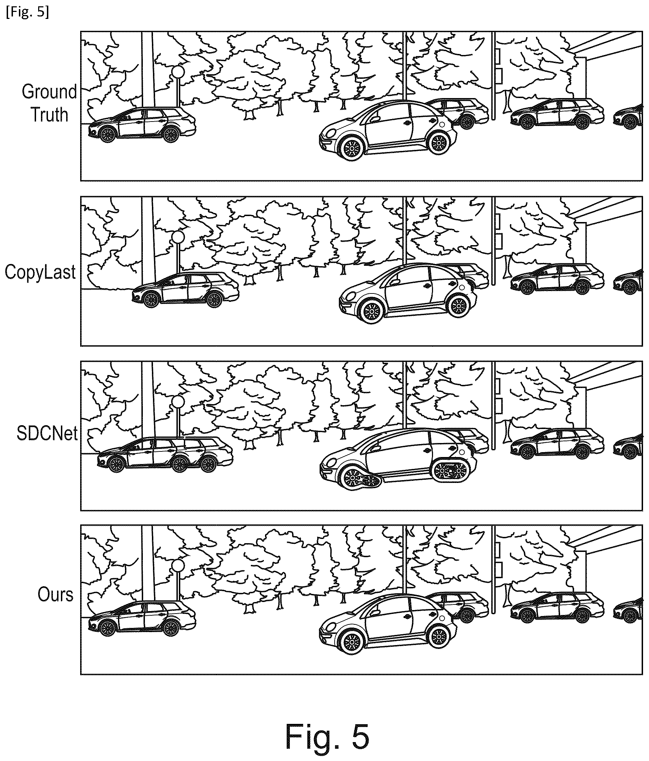

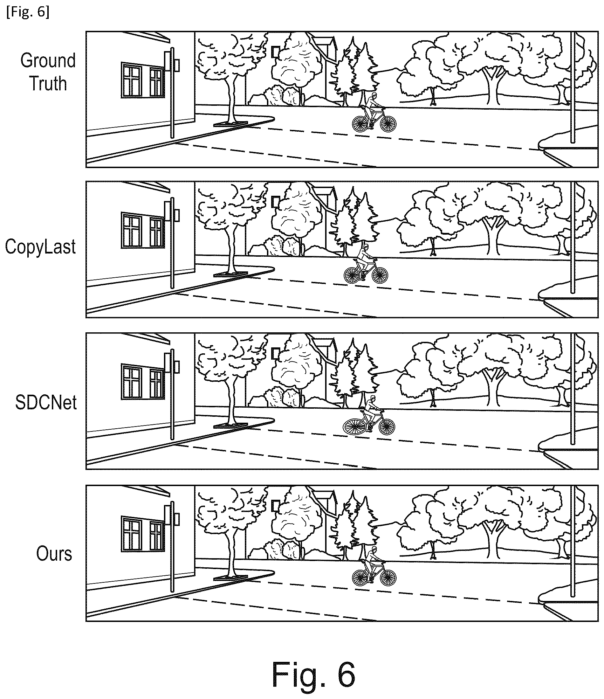

The results of figures 5 and 6 show that the reconstructed objects conserve shape and show an improvement of over 10% IoU of future objects positions compared to existing extrapolation techniques. A higher IoU is crucial as it indicates the accuracy of object localization and segmentation. As a consequence, the invention is highly efficient and represents an outstanding candidate for latency-controlled video delivery systems.

Of course, the invention is not limited to the above-described embodiments.

The method can be applied to applications where video shall be transmitted with ultra-low latency, together with lossy transmissions. Zero video latency is required in applications where video perception triggers decisions and actions, decisions that can be taken by humans or machines. Such applications encompass remote control of systems, telemedicine, and gaming, but not only.

The invention can be used in remote control of systems. Remote control of video-based systems includes use cases such as for example remote surgery, remote driving (taking over a failed system) or real-time video training. Video display is the support for a human or a machine operator to make decisions and drive a remote system. Some of these systems may be mobile, i.e., connected to the network by using a radio network connection, which may lead to data or packets losses.

A direct use case of the invention may be the remote control of a train. In this application, a train driver may remotely control a train without being present on board. A camera system is installed in each locomotive, aiming to provide the driver with a live view. The driver has full control of the train and additionally to video information uses many other information (brakes, speed...) that are also provided thanks to the wireless network connection with the train. The constraint on latency is particularly stringent for braking needs: for example, a train traveling at 60 km/h (16.7 m/s) covers 5 meters in 300 ms. A braking delay of 5 meters is considered the maximum acceptable limit. Therefore, the total latency, including the reaction time to railway signaling, must be no more than 300 ms. This time must encompass both system latency and human reaction time, which is approximately 100 ms. This leaves with an acceptable system latency of 200 ms.

In the future, remote driving of connected and autonomous cars may be implemented in various scenarios. One such scenario involves performing difficult or technical maneuvers that the vehicle cannot handle automatically, such as temporary parking for autonomous goods delivery or maneuvering into a ferry. Another scenario includes providing driving assistance to an autonomous vehicle experiencing a technical failure when the driver is unable to take control, such as navigating on a frozen road, which is beyond the capabilities of both the autonomous system and the driver, or when the driver is impaired. Additionally, remote driving may be used for operating taxis, managing the lead truck in a platooning system while the driver is resting, and offering remote driving lessons.

The method according to the invention can be applied to telemedicine. One use case is close to the case of the remote control of systems except that a wired network is used for minimizing network latency and losses. In a mentoring use case, a junior surgeon while operating is guided by a remote experienced surgeon, together with conversational activities between them. This requires a conversational-type latency of less than 500ms, which is less critical than the remote control of mobile systems. The activity itself is critical and requires a reliable video and audio connection, as well as high-resolution video quality, which is limited by endoscopic cameras resolution (usually HD, and less than UHD).

Gaming is another possible application, where users have to be able to react as soon as possible from a perceived situation. Latency is a key issue for this use case, in particular when graphic elements are computed in the cloud and streamed as video to the user's rendering application. This use case concerns also any synthetic environment (metaverse, virtual or augmented reality) where the user has to react to situations.

**List of cited references**

[1] M. Vijayaratnam, M. Cagnazzo, G. Valenzise, A. Trioux, and M. Kieffer, "Towards zero-latency video transmission through frame extrapolation," in 2022 IEEE International Conference on Image Processing (ICIP). IEEE, 2022, pp. 2122-2126.

[2] M. Vijayaratnam, G. Valenzise, M. Cagnazzo, and E. Tartaglione, "A latency compensation framework for video transmission based on frame extrapolation," Available at SSRN 4557552, 2022.

[3] H. Kanj, A. Trioux, M. Cagnazzo, F.-X. Coudoux, P. Corlay, and M. Kieffer, "Glass-to-glass delay reduction: encoding rate reduction vs. video frame extrapolation," in 2023 IEEE 25th International Workshop on Multimedia Signal Processing (MMSP). IEEE, 2023, pp. 1-6.

[4] M. Vijayaratnam, M. Milovanovic, M. Cagnazzo, E. Tartaglione, and G. Valenzise, "Unified measures for the rate-distortion-latency trade-off," in 2023 IEEE International Conference on Visual Communications and Image Processing (VCIP), 2023, pp. 1-5.

[5] F. A. Reda, G. Liu, K. J. Shih, et al., "SDCNet: Video prediction using spatially-displaced convolution," 2021.

[6] B. Mildenhall, P. P. Srinivasan, M. Tancik, J. T. Barron, R. Ramamoorthi, and R. Ng, "Nerf: Representing scenes as neural radiance fields for view synthesis," Communications of the ACM, vol. 65, no. 1, pp. 99-106, 2021.

[7] K. Gao, Y. Gao, H. He, D. Lu, L. Xu, and J. Li, "Nerf: Neural radiance field in 3d vision, a comprehensive review," arXiv preprint arXiv:2210.00379, 2022.

[8] H. Chen, B. He, H. Wang, Y. Ren, S. N. Lim, and A. Shrivastava, "Nerv: Neural representations for videos," Advances in Neural Information Processing Systems, vol. 34, pp. 21557-21568, 2021.

[9] J. S. Yoon, K. Kim, O. Gallo, H. S. Park, and J. Kautz, "Novel view synthesis of dynamic scenes with globally coherent depths from a monocular camera," in Proceedings of the IEEE/CVF Conference on Computer Vision and Pattern Recognition, 2020, pp. 5336-5345.

[10] C. Gao, A. Saraf, J. Kopf, and J.-B. Huang, "Dynamic view synthesis from dynamic monocular video," in Proceedings of the IEEE/CVF International Conference on Computer Vision, 2021, pp. 5712-5721.

[11] T. Wu, F. Zhong, A. Tagliasacchi, F. Cole, and C. Oztireli, "D 2nerf: Self-supervised decoupling of dynamic and static objects from a monocular video," Advances in Neural Information Processing Systems, vol. 35, pp. 32653-32666, 2022.

[12] J. Ost, F. Mannan, N. Thuerey, J. Knodt, and F. Heide, "Neural scene graphs for dynamic scenes," in Proceedings of the IEEE/CVF Conference on Computer Vision and Pattern Recognition, 2021, pp. 2856- 2865.

[13] L. Song, A. Chen, Z. Li, Z. Chen, L. Chen, J. Yuan, Y. Xu, and A. Geiger, "Nerfplayer: A streamable dynamic scene representation with decomposed neural radiance fields," IEEE Transactions on Visualization and Computer Graphics, vol. 29, no. 5, pp. 2732-2742, 2023.

[14] L. Li, Z. Shen, Z. Wang, L. Shen, and P. Tan, "Streaming radiance fields for 3d video synthesis," Advances in Neural Information Processing Systems, vol. 35, pp. 13485-13498, 2022.

[15] S. Wang, A. Supikov, J. Ratcliff, H. Fuchs, and R. Azuma, "Inv: Towards streaming incremental neural videos," arXiv preprint arXiv:2302.01532, 2023.

[16] T. Deng, S. Liu, X. Wang, Y. Liu, D. Wang, and W. Chen, "Prosgnerf: Progressive dynamic neural scene graph with frequency modulated auto-encoder in urban scenes," arXiv preprint arXiv:2312.09076, 2023.

[17] T. Wu, F. Zhong, A. Tagliasacchi, F. Cole, and C. Oztireli, "D 2 nerf: Self-supervised decoupling of dynamic and static objects from a monocular video," arXiv preprint arXiv:2205.15838, 2022.

[18] C. Gao, A. Saraf, J. Kopf, and J.-B. Huang, "Dynamic view synthesis from dynamic monocular video," in Proceedings of the IEEE/CVF International Conference on Computer Vision, 2021, pp. 5712-5721.

[19] Y. Zhang et al., "Video extrapolationin space and time," arXiv preprint arXiv:2205.02084, 2022.

[20] L. Song, X. Gong, B. Planche, et al., "Pref: Predictability regularized neural motion fields," in Computer Vision-ECCV 2022: 17th European Conference, Tel Aviv, Israel, October 23-27, 2022, Proceedings, Part XXII, Springer, 2022, pp. 664-681.

[21] E. Tretschk, A. Tewari, V. Golyanik, M. Zollh¨ofer, C. Lassner, and C. Theobalt, "Nonrigid neural radiance fields: Reconstruction and novel view synthesis of a dynamic scene from monocular video," in Proceedings of the IEEE/CVF International Conference on Computer Vision, 2021, pp. 12959-12970.

[22] M. Tancik, V. Casser, X. Yan, et al., "Block-nerf: Scalable large scene neural view synthesis," in Proceedings of the IEEE/CVF Conference on Computer Vision and Pattern Recognition, 2022, pp. 8248-8258.

[23] A. Kirillov, E. Mintun, N. Ravi, H. Mao, C. Rolland, L. Gustafson, T. Xiao, S. Whitehead, A. C. Berg, W.-Y. Lo, P. Doll'ar, and R. Girshick, "Segment anything," arXiv:2304.02643, 2023.

[24] X. Weng, J. Wang, D. Held, and K. Kitani, "AB3DMOT: A Baseline for 3D Multi-Object Tracking and New Evaluation Metrics," ECCVW, 2020.

[25] S. Zhou, C. Li, K. C. Chan, and C. C. Loy, "Propainter: Improving propagation and transformer for video inpainting," in Proceedings of the IEEE/CVF International Conference on Computer Vision, 2023, pp. 10477-10486.

[26] A. Geiger, P. Lenz, and R. Urtasun, "Are we ready for autonomous driving? the kitti vision benchmark suite," in 2012 IEEE conference on computer vision and pattern recognition. IEEE, 2012, pp. 3354-3361.

[27] A. Gaidon, Q. Wang, Y. Cabon, and E. Vig, "Virtual worlds as proxy for multi-object tracking analysis," in Proceedings of the IEEE conference on computer vision and pattern recognition, 2016, pp. 4340-4349.

[28] M. Vijayaratnam, M. Cagnazzo, G. Valenzise, and E. Tartaglione, "All predictions matter: an online video prediction approach," in 2023 11th European Workshop on Visual Information Processing (EUVIP). IEEE, 2023, pp. 1-5.

## Claims

1. Method for reducing latency in video transmission, using at least an input video sequence taken by a camera and a neural network $\mathcal{F}_{\theta_c}^{(N)}$ that accounts, at the encoder side,

> for dynamic objects at a $N$-th frame of said input video sequence,
> the method comprising at least the steps of, for a predefined time step:
>
> > i. initializing the neural network with a warm-up training for frames $I_{0,l}, I_{0,r} ... I_{N,l}, I_{N,r}$ with $I_{i,j}$ denoting the i-th frame in the input video sequence and jetl,rl denoting left ($l$) or right ($r$) view associated in order to model objects $\mathbf{I}_o$ present in each frame,
> > ii. operating the network to learn a latent encoding vector for each distinct object $\mathbf{I}_o$ and register the position $\mathbf{p}_o$ of said objects,
> > iii. in an inference step, predicting the positions $\hat{\mathbf{p}}_o$ of each object by using a filter, and
> > iv. using the frame predicted at the previous time step as input for the network and the positions of the objects predicted in step iii) to render the estimated position of the objects at the next time step in order to predict the next frame.

2. Method according to claim 1, wherein the neural network includes neural radial fields, especially neural scene graphs.

3. Method according to claim 1 or 2, wherein the frames predicted at the encoder side are sent to the receiver side so that only the predicted frames are displayed.

4. Method according to any of the preceding claims, wherein at the arrival of the next frames, the neural network is fine-tuned to update its modelization of the objects and following this the inference step is employed once again.

5. Method according to any of the preceding claims, wherein the frames of the input video sequence are stereo pair images.

6. Method according to any of the preceding claims, wherein the filter is a Kalman filter.

7. Method according to any one of the preceding claims, wherein, at the warm-up training step, masks of the moving objects are extracted using Segment Anything Model.

8. Method according to any one of the preceding claims, wherein, at the warm-up training step, the neural network is trained only on the pixels of the objects to learn about their 3D models.

9. Method according to any one of the preceding claims, wherein, at the inference step, the tracking algorithm AB3DMOT is used for predicting the position of the objects for the next time step.

10. Method according to any one of the preceding claims, wherein the following equation is used for effectively computing the positions of the objects for the next time step:

$$\mathcal{F}_{\theta_c}^{(N)} : (\mathbf{r}, \mathbf{d}, \mathbf{l}_o, \hat{\mathbf{p}}_o) \to (\hat{\mathbf{c}}, \hat{\sigma})$$

with the neural model being $\mathcal{F}_{\theta_c}^{(N)} : (\mathbf{r}, \mathbf{d}, \mathbf{l}_o, \mathbf{p}_o) \to (\mathbf{c}, \sigma)$, and $\mathbf{p}_o = [x, y, z]_o$.

11. Method according to any one of the preceding claims, wherein for the background pixels, a video inpainting tool, especially ProPainter, is used from the input frames and the masks used at training to filter out the objects.

12. Method according to any one of the preceding claims, wherein a linear combination of pixels from both foreground and background regions of the frames is employed to fully reconstruct the next frame.

13. Computer program product for reducing latency in video transmission, the computer program product comprising a support and stored on this support instructions that can be read by a processor, these instructions being configured to perform the steps of the method according to any one of the preceding claims.

[Fig. 1]

## Glass To Glass Delay

| Encoding | Transmission | Decoding |
|---|---|---|

| Acquisition | Encoder | Network | Decoder | Display |
|---|---|---|---|---|

# Fig. 1

[Fig. 2]

time

$I_{N,l}$
$I_{N,r}$

$I_{N+1,l}$
$I_{N+1,r}$

$I_{N+2,l}$
$I_{N+2,r}$

Refine

Refine

NeRF
$F_{\theta_e}^{(N)}$

NeRF
$F_{\theta_e}^{(N+1)}$

...

$\hat{I}_{N+1,l}$

$\hat{I}_{N+2,l}$

...

Tx
Rx

$\hat{I}_{N+1,l}$

$\hat{I}_{N+2,l}$

...

# Fig. 2

[Fig. 3]

EP 4 723 647 A1

(a) Warmup training to learn objects dynamics in 3D space

(b) Inference scheme to produce next frame

Fig. 3

[Fig. 4]

Fig. 4

[Fig. 5]

Fig. 5

[Fig. 6]

Ground
Truth

CopyLast

SDCNet

Ours

Fig. 6

# EP 4 723 647 A1

**EUROPEAN SEARCH REPORT**

Application Number

EP 24 30 6609

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | VIJAYARATNAM MELAN ET AL: "All Predictions Matter: an Online Video Prediction Approach", 2023 11TH EUROPEAN WORKSHOP ON VISUAL INFORMATION PROCESSING (EUVIP), IEEE, 11 September 2023 (2023-09-11), pages 1-5, XP034474709, DOI: 10.1109/EUVIP58404.2023.10323048 [retrieved on 2023-11-22] | 1-9, 11-13 | INV. H04N21/234 H04N21/438 H04N21/81 G06N3/045 |
| Y | * section III; figure 1 * | 10 | |
| Y,D | OST JULIAN ET AL: "Neural Scene Graphs for Dynamic Scenes", 2021 IEEE/CVF CONFERENCE ON COMPUTER VISION AND PATTERN RECOGNITION (CVPR), IEEE, 20 June 2021 (2021-06-20), pages 2855-2864, XP034010139, DOI: 10.1109/CVPR46437.2021.00288 [retrieved on 2021-10-15] * section 3 Neural Scene Graphs * | 10 | |
| A,D | VIJAYARATNAM MELAN ET AL: "Towards Zero-Latency Video Transmission Through Frame Extrapolation", 2022 IEEE INTERNATIONAL CONFERENCE ON IMAGE PROCESSING (ICIP), IEEE, 16 October 2022 (2022-10-16), pages 2122-2126, XP034292791, DOI: 10.1109/ICIP46576.2022.9897958 [retrieved on 2023-02-09] * figure 1 * | 1-13 | TECHNICAL FIELDS SEARCHED (IPC) H04N G06N |

The present search report has been drawn up for all claims

| Place of search | Date of completion of the search | Examiner |
|---|---|---|
| Munich | 26 February 2025 | Kopilovic, Ivan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 723 647 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Towards zero-latency video transmission through frame extrapolation. **M. VIJAYARATNAM** ; **M. CAGNAZZO** ; **G. VALENZISE** ; **A. TRIOUX** ; **M. KIEFFER**. 2022 IEEE International Conference on Image Processing (ICIP). IEEE, 2022, 2122-2126
- **M. VIJAYARATNAM** ; **G. VALENZISE** ; **M. CAGNAZZO** ; **E. TARTAGLIONE**. A latency compensation framework for video transmission based on frame extrapolation. *SSRN 4557552*, 2022
- Glass-to-glass delay reduction: encoding rate reduction vs. video frame extrapolation. **H. KANJ** ; **A. TRIOUX** ; **M. CAGNAZZO** ; **F.-X. COUDOUX** ; **P. CORLAY** ; **M. KIEFFER**. 2023 IEEE 25th International Workshop on Multimedia Signal Processing (MMSP). IEEE, 2023, 1-6
- **M. VIJAYARATNAM** ; **M. MILOVANOVIC** ; **M. CAGNAZZO** ; **E. TARTAGLIONE** ; **G. VALENZISE**. Unified measures for the rate-distortion-latency trade-off. *2023 IEEE International Conference on Visual Communications and Image Processing (VCIP)*, 2023, 1-5
- **F. A. REDA** ; **G. LIU** ; **K. J. SHIH et al.** *SDCNet: Video prediction using spatially-displaced convolution*, 2021
- **B. MILDENHALL** ; **P. P. SRINIVASAN** ; **M. TANCIK** ; **J. T. BARRON** ; **R. RAMAMOORTHI** ; **R. NG**. Nerf: Representing scenes as neural radiance fields for view synthesis. *Communications of the ACM*, 2021, vol. 65 (1), 99-106
- **K. GAO** ; **Y. GAO** ; **H. HE** ; **D. LU** ; **L. XU** ; **J. LI**. Nerf: Neural radiance field in 3d vision, a comprehensive review. *arXiv:2210.00379*, 2022
- **H. CHEN** ; **B. HE** ; **H. WANG** ; **Y. REN** ; **S. N. LIM** ; **A. SHRIVASTAVA**. Nerv: Neural representations for videos. *Advances in Neural Information Processing Systems*, 2021, vol. 34, 21557-21568
- **J. S. YOON** ; **K. KIM** ; **O. GALLO** ; **H. S. PARK** ; **J. KAUTZ**. Novel view synthesis of dynamic scenes with globally coherent depths from a monocular camera. *Proceedings of the IEEE/CVF Conference on Computer Vision and Pattern Recognition*, 2020, 5336-5345
- **C. GAO** ; **A. SARAF** ; **J. KOPF** ; **J.-B. HUANG**. Dynamic view synthesis from dynamic monocular video. *Proceedings of the IEEE/CVF International Conference on Computer Vision*, 2021, 5712-5721

- **T. WU** ; **F. ZHONG** ; **A. TAGLIASACCHI** ; **F. COLE** ; **C. OZTIRELI**. D 2nerf: Self-supervised decoupling of dynamic and static objects from a monocular video. *Advances in Neural Information Processing Systems*, 2022, vol. 35, 32653-32666
- **J. OST** ; **F. MANNAN** ; **N. THUEREY** ; **J. KNODT** ; **F. HEIDE**. Neural scene graphs for dynamic scenes. *Proceedings of the IEEE/CVF Conference on Computer Vision and Pattern Recognition*, 2021, 2856-2865
- **L. SONG** ; **A. CHEN** ; **Z. LI** ; **Z. CHEN** ; **L. CHEN** ; **J. YUAN** ; **Y. XU** ; **A. GEIGER**. Nerfplayer: A streamable dynamic scene representation with decomposed neural radiance fields. *IEEE Transactions on Visualization and Computer Graphics*, 2023, vol. 29 (5), 2732-2742
- **L. LI** ; **Z. SHEN** ; **Z. WANG** ; **L. SHEN** ; **P. TAN**. Streaming radiance fields for 3d video synthesis. *Advances in Neural Information Processing Systems*, 2022, vol. 35, 13485-13498
- **S. WANG** ; **A. SUPIKOV** ; **J. RATCLIFF** ; **H. FUCHS** ; **R. AZUMA**. Inv: Towards streaming incremental neural videos. *arXiv:2302.01532*, 2023
- **T. DENG** ; **S. LIU** ; **X. WANG** ; **Y. LIU** ; **D. WANG** ; **W. CHEN**. Prosgnerf: Progressive dynamic neural scene graph with frequency modulated auto-encoder in urban scenes. *arXiv:2312.09076*, 2023
- **T. WU** ; **F. ZHONG** ; **A. TAGLIASACCHI** ; **F. COLE** ; **C. OZTIRELI**. D 2 nerf: Self-supervised decoupling of dynamic and static objects from a monocular video. *arXiv:2205.15838*, 2022
- **Y. ZHANG et al.** Video extrapolationin space and time. *arXiv:2205.02084*, 2022
- Predictability regularized neural motion fields. **L. SONG** ; **X. GONG** ; **B. PLANCHE et al.** Computer Vision-ECCV 2022: 17th European Conference, Tel Aviv, Israel, October 23-27, 2022, Proceedings, Part XXII. Springer, 2022, 664-681
- **E. TRETSCHK** ; **A. TEWARI** ; **V. GOLYANIK** ; **M. ZOLLH¨OFER** ; **C. LASSNER** ; **C. THEOBALT**. Nonrigid neural radiance fields: Reconstruction and novel view synthesis of a dynamic scene from monocular video. *Proceedings of the IEEE/CVF International Conference on Computer Vision*, 2021, 12959-12970

16

- **M. TANCIK** ; **V. CASSER** ; **X. YAN et al.** Block-nerf: Scalable large scene neural view synthesis. *Proceedings of the IEEE/CVF Conference on Computer Vision and Pattern Recognition*, 2022, 8248-8258
- **A. KIRILLOV** ; **E. MINTUN** ; **N. RAVI** ; **H. MAO** ; **C. ROLLAND** ; **L. GUSTAFSON** ; **T. XIAO** ; **S. WHITEHEAD** ; **A. C. BERG** ; **W.-Y. LO**. Segment anything. *arXiv:2304.02643*, 2023
- **X. WENG** ; **J. WANG** ; **D. HELD** ; **K. KITANI**. AB3DMOT: A Baseline for 3D Multi-Object Tracking and New Evaluation Metrics. *ECCVW*, 2020
- **S. ZHOU** ; **C. LI** ; **K. C. CHAN** ; **C. C. LOY**. Propainter: Improving propagation and transformer for video inpainting. *Proceedings of the IEEE/CVF International Conference on Computer Vision*, 2023, 10477-10486
- Are we ready for autonomous driving? the kitti vision benchmark suite. **A. GEIGER** ; **P. LENZ** ; **R. URTASUN**. 2012 IEEE conference on computer vision and pattern recognition. IEEE, 2012, 3354-3361
- **A. GAIDON** ; **Q. WANG** ; **Y. CABON** ; **E. VIG**. Virtual worlds as proxy for multi-object tracking analysis. *Proceedings of the IEEE conference on computer vision and pattern recognition*, 2016, 4340-4349
- All predictions matter: an online video prediction approach. **M. VIJAYARATNAM** ; **M. CAGNAZZO** ; **G. VALENZISE** ; **E. TARTAGLIONE**. 2023 11th European Workshop on Visual Information Processing (EUVIP). IEEE, 2023, 1-5